# EUROPEAN PATENT APPLICATION

(11) **EP 4 582 481 A1**
(43) Date of publication of application: **09.07.2025**
(21) Application number: 23860217.1
(22) Date of filing: 25.08.2023
(51) Int. Cl.: C08L 71/02, C08K 3/016, C08K 3/22, C08L 49/00

(54) **MOISTURE-CURABLE RESIN COMPOSITION**

(30) Priority: 02.09.2022 JP 2022139617
(71) Applicant: ThreeBond Co., Ltd., Tokyo 192-0398 (JP)
(72) Inventor: INOUE, Koshiro, Hachioji-shi, Tokyo 192-0398 (JP); NISHIZAWA, Takuto, Hachioji-shi, Tokyo 192-0398 (JP)
(74) Representative: Crow, Martin
(86) International application number: PCT/JP2023/030731
(87) International publication number: WO 2024/048455

(57) **Abstract**

[Problem] Disclosed herein is a moisture-curable resin composition whose cured product achieves both excellent displacement followability and resin strength while having excellent flame retardancy corresponding to UL94V-0.

[Solution] The moisture-curable resin composition contains the following components (A) to (D):
component (A): an oxyalkylene polymer having a hydrolyzable silyl group;
component (B) : a flame retarder that is in liquid form at 25°C:
component (C) : a flame retarder that is solid at 25°C; and
component (D): a curing catalyst.

## Description

### TECHNICAL FIELD

The present invention relates to a moisture-curable resin composition.

### BACKGROUND ART

In recent years, automobiles have been electrified, and therefore electric components to be installed on automobiles have increased. Examples of such automotive electric components include batteries. In battery cases, highly-combustible lithium-ion batteries are housed, and therefore adhesives or sealants used for the battery cases are required to have flame retardancy corresponding to UL94V- 0 (Patent Literature 1).

### CITATION LIST

### PATENT LITERATURE

Patent Literature 1: WO2011/089987

### SUMMARY OF INVENTION

Ina flame -retardant moisture -curable resin composition disclosed in Patent Literature 1, a metallic hydroxide powder such as aluminum hydroxide is used as a non-halogen/non-phosphorus flame retarder(Patent Literature 1, Claim 1).

A metallic hydroxide powder such as aluminum hydroxide is preferred because by adding it to a moisture-curable resin composition, the strength of a cured product of the moisture-curable resin composition improves as well as flame retardancy is imparted to the cured product. On the other hand, the present inventors have focused attention on that addition of such a metallic hydroxide powder reduces the displacement followability of the cured product, and therefore when the cured product is used as an adhesive or a sealant for automotive electric components, there is a case where the adhesive or the sealant cannot follow vibration during driving and is therefore peeled-of f at joining portions. When the displacement followability of the cured product is improved by enhancing flexibility in order to solve the problem, the resin strength of the cured product usually reduces so that the performance of the cured product as an adhesive or a sealant reduces.

As described above, there is a trade-off relation between resin strength and displacement followability, and therefore it is difficult to obtain an adhesive or a sealant that achieves both adequate resin strength and displacement followability while maintaining flame retardancy.

It is therefore an object of the present invention to provide a moisture-curable resin composition whose cured product obtained by curing exhibits flame retardancy corresponding to UL94V-0 and achieves both excellent resin strength and displacement followability.

In order to achieve the above object, the present inventors have intensively studied and, as a result, have found a method for obtaining a moisture-curable resin composition whose cured product has excellent resin strength and displacement followability while maintaining flame retardancy corresponding to UL94V-0. It should be noted that in the present invention, the displacement followability is evaluated by measuring elongation percentage in accordance with JIS K6251: 2017, and a higher elongation percentage means higher displacement followability.

A summary of the present invention will be described below.
[1] Amoisture-curable resin composition containing the following components (A) to (D):
   component (A): an oxyalkylene polymer having a hydrolyzable silyl group;
   component (B): a flame retarder that is in liquid form at 25°C;
   component (C): a flame retarder that is solid at 25°C; and
   component (D): a curing catalyst.
[2] The moisture-curable resin composition according to [1], wherein the component (B) contains a phosphorus -based flame retarder.
[3] The moisture-curable resin composition according to [1] or [2], wherein the component (B) contains a compound represented by the following formula (3): 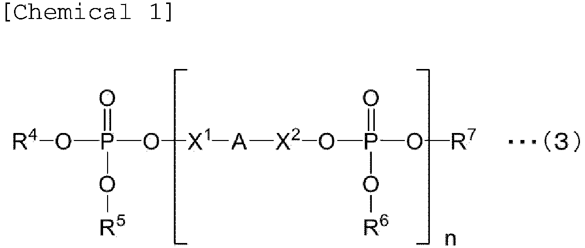
   wherein groups represented by R⁴ to R⁷ are each independently a hydrogen atom, an alkyl group, or a monovalent aromatic hydrocarbon group;
   X¹ is a divalent aromatic hydrocarbon group;
   X² is a single bond or a divalent aromatic hydrocarbon group;
   a group represented by A is a single bond, an alkylene group, or a divalent aromatic hydrocarbon group, wherein when X² is a single bond, A is a single bond; and
   n represents a polymerization degree and is an integer of 1 to 5.
[4] The moisture-curable resin composition according to any one of [1] to [3], wherein the component (C) contains a phosphorus -based flame retarder and/or aluminum hydroxide.
[5] The moisture-curable resin composition according to any one of [1] to [4], wherein a mass ratio between the component (B) and the component (C) is 9:1 to 1:9.
[6] The moisture-curable resin composition according to any one of [1] to [5], wherein a total amount of the component (B) and the component (C) is 10 to 500 parts by mass per 100 parts by mass of the component (A).
[7] The moisture-curable resin composition according to any one of [1] to [6], wherein the component (D) is a zinc catalyst and/or a bismuth catalyst.
[8] The moisture-curable resin composition according to any one of [1] to [7], further containing an inorganic filler as a component (E).
[9] The moisture-curable resin composition according to any one of [1] to [8], further containing a silane compound as a component (F).
[10] A cured product formed by curing the moisture-curable resin composition according to any one of [1] to [9].

The present invention provides a moisture-curable resin composition which has excellent flame retardancy and whose cured product achieves both excellent resin strength and displacement followability.

### DESCRIPTION OF EMBODIMENTS

The present invention will be described in detail below. It should be noted that the present invention is not limited only to the following embodiments. Unless otherwise specified, operations and measurements of physical properties etc. are herein performed under conditions of room temperature (20°C or higher and 25°C or lower) /a relative humidity of 40% RH or higher and 50% RH or lower. The phrase "A and/or B" includes each of A and B and all combinations of one or more of them, and specifically means at least one of A and B and means A, B, and a combination of A and B. It should be noted that the phrase "X to Y" is herein used to express a range including numerical values before and after "to" (X and Y) as a lower limit and an upper limit, and means "X or more and Y or less". When there are a plurality of phrases "X to Y", for example, when there is a phrase "X1 to Y1, or X2 to Y2", the disclosure of each numerical value as the upper limit, the disclosure of each numerical value as the lower limit, and the disclosure of a combination of those upper and lower limits are all included (i.e., the legal basis for amendments) . Specifically, an amendment to X1 or more, an amendment to Y2 or less, an amendment to X1 or less, an amendment to Y2 or more, and an amendment to X1 to X2, an amendment to X1 to Y2, and the like should all be considered legal.

In the present invention, "free from" in, for example, the phrase "free from a compound or the like" means "substantially free from" and may also mean that the amount of the compound or the like is equal to or less than the detection limitof a measurement device. The phrase "substantially free from" means that a certain component is not intentionally added, and does not exclude a case where a certain component is contained as, for example, an impurity generated by an unintended side reaction. In one embodiment, in the case of being "free from" a certain compound, the content of the compound is preferably less than 10 mass%, more preferably 5 mass% or less, even more preferably 1 mass% or less, still even more preferably 0.1 mass% or less. In one embodiment, in the case of being "free from" a certain compound, the content of the compound may be 1000 ppm by mass or less, 100 ppm by mass or less, 10 ppm by mass or less, 1 ppm by mass or less, or 0.1 ppm by mass or less.

One aspect of the present invention provides a moisture-curable resin composition containing the following components (A) to (D): component (A): an oxyalkylene polymer having a hydrolyzable silyl group; component (B): a flame retarder that is in liquid format 25°C; component (C): a flame retarder that is solid at 25°C; and component (D): a curing catalyst. This makes it possible to provide a moisture-curable resin composition that has excellent flame retardancy and achieves both excellent resin strength and displacement followability after curing.

The component (A) used in the present invention is an oxyalkylene polymer having a hydrolyzable silyl group. In the present invention, the oxyalkylene polymer (which is herein referred to as an "oxyalkylene polymer" or a "polyoxyalkylene polymer", these terms being exchangeably used) refers to a polymer (excluding a siloxane polymer (which is herein a polymer having a main chain skeleton in which siloxane bonds (Si-O-Si) are linked)) containing a polymer whose main chain has an oxyalkylene skeleton (polyethylene glycol, polypropylene glycol, polytrimethylene glycol, polytetramethylene glycol, or the like) (which is herein referred to also as a "polymer having an oxyalkylene moiety" or a "polymer having a polyoxyalkylene moiety", these terms being exchangeably used). The hydrolyzable silyl group of the component (A) may be bonded to the terminal and/or the side chain of the oxyalkylene polymer, but is preferably bonded to the terminal from the viewpoint of imparting excellent displacement followability and resin strength to a cured product. The component (A) is preferably in liquid form at 25°C from the viewpoint of handleability. As the component (A), one type of component (A) may be used singly or two or more types of components (A) may be used in combination.

An oxyalkylene group that is a repeating unit forming the oxyalkylene skeleton may be a linear or branched oxyalkylene group having 2 to 20 carbon atoms, preferably 2 to 10 carbon atoms, more preferably 2 to 4 carbon atoms, even more preferably 2 to 3 carbon atoms. In one embodiment, the oxyalkylene group as a repeating unit may be an oxyethylene group, an oxypropylene group, an oxytrimethylene group, or an oxytetramethylene group. When the polymer has the above-described structure as a repeating unit, a cured product of the present invention can have both excellent displacement followability and resin strength. Further, the above-described structure has high polarity, and therefore, the polymer having the above-described structure as a repeating unit is not only highly compatible with the other components added but also excellent in adhesiveness. The main chain skeleton of the polymer having a polyoxyalkylene moiety may be constituted from only one type of repeating unit or two or more types of repeating units . In one embodiment, when the main chain skeleton of the polymer having a polyoxyalkylene moiety is constituted from only one type of repeating unit, the repeating unit may be an oxyalkylene group. In one embodiment, when the main chain skeleton of the polymer having a polyoxyalkylene moiety is constituted from two or more types of repeating units, the main chain of the polymer having a polyoxyalkylene moiety may contain only two or more types of repeating units composed of only an oxyalkylene group or may contain both a repeating unit composed of only an oxyalkylene group and a repeating unit not containing an oxyalkylene group. An example of the repeating unit not containing an oxyalkylene group is, but not limited to, the following structure: 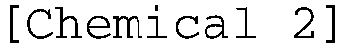 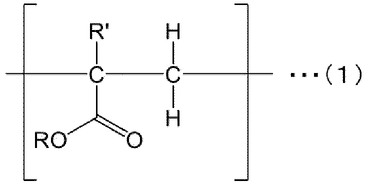 wherein R is a hydrogen atom or a linear or branched alkyl group having 1 to 20 carbon atoms, 1 to 10 carbon atoms, or 1 to 4 carbon atoms, and R' is a hydrogen atom or a methyl group. When the repeating unit not containing an oxyalkylene group is contained, the total content of the repeating unit composed of only an oxyalkylene group in the polymer may be 50 mass% or more, 60 mass% or more, 70 mass% or more, 80 mass% or more, or 90 mass% or more. When the polymer having such a repeating unit as described above is used as a component (A), it is possible to obtain a resin composition whose cured product has excellent displacement followability and resin strength. Further, the polymer having such a repeating unit as described above does not include a structure that may generate a low-molecular-weight siloxane, and therefore it is possible to obtain a low-molecular-weight siloxane-free resin composition.

In one embodiment, examples of the oxyalkylene skeleton include, but are not limited to, polyethylene glycol, polypropylene glycol, polytrimethylene glycol, and polytetramethylene glycol. As the polymer having an oxyalkylene skeleton, one type of polymer having an oxyalkylene skeleton may be used singly or two or more types of polymers having an oxyalkylene skeleton may be used in combination. In one embodiment, the polymer having an oxyalkylene moiety may be a copolymer. Examples of the copolymer include, but are not limited to, a polyethylene glycol-polypropylene glycol copolymer, a polypropylene glycol-polytrimethylene glycol copolymer, a polyethylene glycol-acrylic acid ester copolymer, a polypropylene glycol-acrylic acid ester copolymer, a polyethylene glycol-methacrylic acid ester copolymer, a polypropylene glycol-methacrylic acid ester copolymer, and combinations of two or more of **them.** When the polymer having an oxyalkylene moiety is a copolymer, the copolymer may be a block copolymer or a random copolymer. These copolymers may be used singly or in combination of two or more of **them.** Alternatively, the copolymer may be used in combination with the polymer that is not a copolymer. The polymer having a polyoxyalkylene moiety may have a linear structure or a branched structure or may be a mixture of a linear polymer having a polyoxyalkylene moiety and a branched polymer having a polyoxyalkylene moiety. In one embodiment, the oxyalkylene polymer may be a mixture of a polymer having an oxyalkylene moiety and a polymer not having an oxyalkylene moiety (however, the mixture is free from a siloxane polymer) or may be constituted from only a polymer having an oxyalkylene moiety. Examples of the polymer not having an oxyalkylene moiety include, but are not limited to, an acrylic polymer, a methacrylic polymer, and a vinyl-based polymer. In one embodiment, the polymer not having an oxyalkylene moiety may be a polymer having a repeating structure represented by the above formula (1). In one embodiment, the polymer not having an oxyalkylene moiety may be a polymer having a repeating structure represented by the above formula (1), wherein R is a linear or branched alkyl group having 1 to 20 carbon atoms, 1 to 10 carbon atoms, or 1 to 4 carbon atoms and R' is a hydrogen atom. In one embodiment, the polymer not having an oxyalkylene moiety may be an acrylic polymer. Here, the acrylic polymer means a polymer made up of monomers having an ethylenic unsaturated bond, such as (meth) acrylic acid ester monomers. As the polymer having an oxyalkylene moiety, one type of polymer having an oxyalkylene moiety may be used singly or two or more types of polymers having an oxyalkylene moiety may be used in combination. As the polymer not having an oxyalkylene moiety, one type of polymer not having an oxyalkylene moiety may be used singly or two or more types of polymers not having an oxyalkylene moiety may be used in combination. When the oxyalkylene polymer is a mixture of a polymer having an oxyalkylene moiety and a polymer not having an oxyalkylene moiety, the component (A) may contain the polymer having an oxyalkylene moiety in an amount of 10 mass% to 90 mass%. In one embodiment, the component (A) may contain the polymer having an oxyalkylene moiety in an amount of 10 mass% or more, 20 mass% or more, 30 mass% or more, 40 mass% or more, 50 mass% or more, 60 mass% or more, 70 mass% or more, 80 mass% or more, or 90 mass% or more. In one embodiment, the component (A) may contain the polymer having an oxyalkylene moiety in an amount of 90 mass% or less, 80 mass% or less, 70 mass% or less, 60 mass% or less, 50 mass% or less, 40 mass% or less, 30 mass% or less, 20 mass% or less, or 10 mass% or less. When two or more types of polymers having an oxyalkylene moiety are contained, the content of the polymer having an oxyalkylene moiety means a total content of the two or more types of polymers having an oxyalkylene moiety. Such a polymer as described above does not include a structure that may generate a low-molecular-weight siloxane, and therefore a resin composition free from a low-molecular-weight siloxane (i.e., a low-molecular-weight siloxane-free resin composition) can be obtained.

The term "low-molecular-weight siloxane" or "cyclic low-molecular-weight siloxane" herein refers to a cyclic dialkylpolysiloxane, and especially means a cyclic trimer (D3) to a cyclic decamer (D10) . When the resin composition is free from a low-molecular-weight siloxane, it is possible to prevent the occurrence of contact fault when the resin composition is used for electric components. In one embodiment, the term "low-molecular-weight siloxane" refers to a cyclic polysiloxane having a molecular weight of 200 to 800. The polysiloxane is expressed also as a siloxane polymer and refers to a polymer whose main chain skeleton is composed of siloxane bonds (Si-O-Si).

The hydrolyzable silyl group is a group in which one to three hydrolyzable groups are bonded to a silicon atom. Examples of the hydrolyzable group include a halogen atom, an alkoxy group, a benzyloxy group, an acyloxide group (also referred to as an acyloxy group), a ketoxymate group, an amino group, an amide group, an aminooxy group, and an alkenyloxide group (also referred to as an alkenyloxy group). Among them, from the viewpoint of curability, the hydrolyzable group is preferably an alkoxy group or a benzyloxy group, more preferably an alkoxy group. When two or more hydrolyzable groups are bonded to a silicon atom, all the hydrolyzable groups may be of the same type, or two or more types of hydrolyzable groups may be mixed.

Examples of the alkoxy group include an alkyloxy group having 1 to 4 carbon atoms, preferably 1 to 3 carbon atoms and a phenoxy group. In one embodiment, examples of the alkoxy group include a methoxy group, an ethoxy group, a n-propyloxy group, an isopropyloxy group, a n-butoxy group, an isobutyl group, a sec-butoxy group, a tert-butoxy group, and a phenoxy group. In one embodiment, from the viewpoint of achieving both displacement followability and resin strength, the alkoxy group is preferably a methoxy group or an ethoxy group, more preferably a methoxy group. When two or more alkoxy groups are bonded to a silicon atom, all the alkoxy groups may be of the same type, or two or more types of alkoxy groups may be mixed. In one embodiment, the alkoxy groups may be two methoxy groups or three methoxy groups, but are pref erably three methoxy groups.

Examples of the hydrolyzable silyl group include, but are not limited to, a trialkoxysilyl group, a dialkoxysilyl group, and a monoalkoxysilyl group. Among them, a trialkoxysilyl group or a dialkoxysilyl group is preferred, and a trialkoxysilyl group is more preferred. In one embodiment, examples of the hydrolyzable silyl group include, but are not limited to, a trimethoxysilyl group, a dimethoxysilyl group, and a monomethoxysilyl group. In one embodiment, the hydrolyzable silyl group is preferably a trimethoxysilyl group or a dimethoxysilyl group, and from the viewpoint of the degree of crosslinking between polymers and the reactivity of a curing reaction, the hydrolyzable silyl group is particularly preferably a trimethoxysilyl group.

The average number of the hydrolyzable silyl groups present in one molecule of the component (A) is at least one, preferably 1.1 to 10, more preferably 1.5 to 5, even more pref erably 1.8 to 4. When the number of the hydrolyzable silyl groups contained in one molecule of the polymer is within the above range, a cured product of the composition exhibits excellent resin strength due to sufficient crosslinking and exhibits excellent flexibility, that is, displacement followability because its network structure is not too dense. When two or more hydrolyzable silyl groups are present in one molecule of the polymer, all the hydrolyzable silyl groups may be of the same type, or two or more types of hydrolyzable silyl groups may be mixed.

The number-average molecular weight of the component (A) may be, but is not limited to, 1,000 to 100,000, 2,000 to 50,000, or 3, 000 to 35,000. The number-average molecular weight of the polymer may be herein a value measured by gel permeation chromatography (GPC) (in terms of polystyrene).

The viscosity of the component (A) at 23°C is preferably 1 to 500 Pa·s, more preferably 20 to 200 Pa·s, most preferably 50 to 80 Pa·s. When the viscosity is 1 Pa·s or more, the moisture-curable resin composition is excellent in workability, and when the viscosity is 500 Pa·s or less, there is no fear of a reduction in displacement followability even when the component (A) is mixed with the component (C). The viscosity of the component (A) is a value measured in accordance with JIS K1557: 2007.

Examples of a commercially-available product of the component (A) include, but are not limited to, Kaneka Silyl (trademark) SAT010, SAX115, SAT030, SAT030, SAT200, SAT350, SAT400, SAX220, SAX510, SAX530, SAX575, SAX580, SAX710, SAX720, SAX725, SAX750, SAX770, S203, S303, S203H, S303H, S943S, S911S, MA440, MA447, MA451, MA903, MA903M, MA904, S943, MAX923, MAX951, SAX510, SAX520, SAX530, and SAX580 (manufactured by KANEKA CORPORATION) and EXCESTAR (trademark) ES-S2410, ES-S2420, ES-S3430, ES-S3610, and ES-S3630 (manufactured by AGC Inc.). These may be used singly or in combination of two or more of them.

In one embodiment, the content of the component (A) in the moisture-curable resin composition may be 10 to 70 mass%, but is preferably 15 to 50 mass%, more preferably 20 to 40 mass%. When two or more types of components (A) are contained, the content of the component (A) means a total content of the two or more types of components (A).

The component (B) used in the present invention is a flame retarder that is in liquid form at 25°C. When the component (B) is used in combination with the component (C) that will be described later, excellent resin strength and displacement followability can be imparted to a cured product. The phrase "in liquid format 25°C" herein means being in liquid form (beingliquid) at 25°C under atmospheric pressure (1013.25 hPa). Examples of the flame retarder usable as the component (B) include a phosphorus-based flame retarder and a nitrogen-based flame retarder. In one embodiment, the component (B) is preferably a phosphorus-based flame retarder from the viewpoint of not reducing resin strength. Further, from the viewpoint of environmental load, the component (B) is preferably free from a halogen atom.

In one embodiment, the component (B) contains a compound represented by the following formula (2): 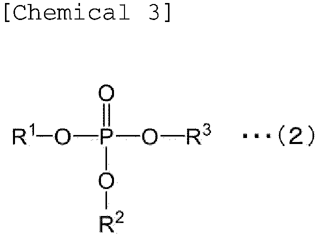 wherein groups represented by R¹, R², and R³ may each independently be a hydrogen atom, an alkyl group, or an aromatic hydrocarbon group.

The alkyl group herein may be a linear or branched alkyl group having 1 to 20 carbon atoms, 1 to 15 carbon atoms, 1 to 10 carbon atoms, 1 to 5 carbon atoms, 1 to 4 carbon atoms, 1 to 3 carbon atoms, or 1 to 2 carbon atoms. Examples of the alkyl group include, but are not limited to, a methyl group, an ethyl group, a propyl group, an isopropyl group, a n-butyl group, an isobutyl group, a sec-butyl group, a tert-butyl group, a pentyl group, an isopentyl group, a neopentyl group, a hexyl group, a heptyl group, an octyl group, a nonyl group, a decyl group, an undecyl group, a dodecyl group, a 2 - ethylhexyl group, a tetradecyl group, an octadecyl group, and an icosyl group.

The aromatic hydrocarbon group herein may be a substituted or unsubstituted aromatic hydrocarbon group having 6 to 30 carbon atoms, 6 to 20 carbon atoms, 6 to 18 carbon atoms, 6 to 12 carbon atoms, or 6 to 10 carbon atoms. Examples of the aromatic hydrocarbon group include, but are not limited to, a phenyl group, a benzyl group, a phenethyl group, an o-, m-, or p-tolyl group, a 2,3-, 2,4-, or 2,5 - xylyl group, a mesityl group, a naphthyl group, an anthryl group, a phenanthryl group, a biphenyl group, a benzhydryl group, a trityl group, and a pyrenyl group. Unless otherwise specified, an aromatic substituent refers to a monovalent aromatic substituent.

The term "substituted" herein means that a hydrogen atom is substituted by another atom or a substituent. Examples of the another atom or the substituent include, but are not limited to, a halogen atom, a hydroxyl group, an amino group, an alkyl group having 1 to 20 carbon atoms, a cycloalkyl group having 3 to 20 carbon atoms, an alkenyl group having 2 to 20 carbon atoms, an alkynyl group having 2 to 20 carbon atoms, an aromatic hydrocarbon group having 6 to 20 carbon atoms, and an alkoxy group having 1 to 20 carbon atoms.

The groups represented by R¹, R², and R³ in the formula (2) may each independently be a methyl group, an ethyl group, a n-propyl group, an isopropyl group, a n-butyl group, an isobutyl group, a sec-butyl group, a tert-butyl group, a phenyl group, a cresyl group, a xylenyl group, or a ((4-hydroxyphenyl)dimethylmethyl)phenyl group.

In one embodiment, the compound that may be contained in the component (B) may have a repeating structure. In one embodiment, the compound that maybe contained in the component (B) may have one or two or more phosphorus atoms in one molecule. In one embodiment, the number of phosphorus atoms contained in one molecule of the compound that may be contained in the component (B) may be 2 or more or 3 or more. In one embodiment, the number of phosphorus atoms that contained in one molecule of the compound that may be contained in the component (B) may be 6 or less or 5 or less.

In one embodiment, the component (B) may contain a compound represented by the following formula (3): 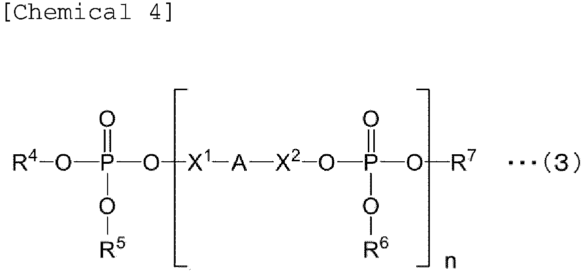
wherein groups represented by R⁴ to R⁷ are each independently a hydrogen atom, an alkyl group, or a monovalent aromatic hydrocarbon group;
X¹ is a divalent aromatic hydrocarbon group;
X² is a single bond or a divalent aromatic hydrocarbon group;
a group represented by A is a single bond, an alkylene group, or a divalent aromatic hydrocarbon group, wherein when X² is a single bond, A is a single bond; and
n represents a polymerization degree and is an integer of 1 to 5. When the component (B) contains the compound represented by the above formula (3), a cured product obtained from the moisture-curable resin composition can exhibit excellent displacement followability, and when the component (B) containing the compound represented by the above formula (3) is used in combination with the component (C), excellent resin strength and displacement followability can be imparted to the cured product.

The divalent aromatic hydrocarbon group may herein be a substituted or unsubstituted divalent aromatic hydrocarbon group containing 6 to 20 carbon atoms, 6 to 12 carbon atoms, or 6 to 10 caron atoms. Examples of the divalent aromatic hydrocarbon group include, but are not limited to, a p-phenylene group, a m-phenylene group, and an o-phenylene group. In one embodiment, the divalent aromatic hydrocarbon group is preferably a substituted or unsubstituted p-phenylene group or a m-phenylene group, more preferably a substituted or unsubstituted p-phenylene group, even more preferably an unsubstituted p-phenylene group.

In one embodiment, the groups represented by R⁴ to R⁷ in the above formula (3) are preferably aromatic hydrocarbon groups. In one embodiment, the groups represented by R⁴ to R⁷ in the above formula (3) are preferably each independently a substituted or unsubstituted phenyl group, more preferably unsubstituted phenyl groups.

In one embodiment, X¹ in the above formula (3) is preferably a p-phenylene group or a m-phenylene group, more preferably a p-phenylene group. In one embodiment, X² is preferably a divalent aromatic hydrocarbon group. In one embodiment, X² is preferably a single bond, a p-phenylene group, or a m-phenylene group, more preferably a p-phenylene group. In one embodiment, A is preferably a single bond or an alkylene group, more preferably a single bond or a substituted or unsubstituted methylene group, even more preferably a dimethylmethylene group.

In one embodiment, in the above formula (3), X¹ is a divalent aromatic hydrocarbon group, and preferably, X² is a divalent aromatic hydrocarbon group and A is an alkylene group. In one embodiment, in the above formula (3), pref erably, X¹ is a substituted or unsubstituted p-phenylene group, X² is a substituted or unsubstituted p-phenylene group, and A is a dialkylmethylene group. In one embodiment, in the above formula (3), preferably, X¹ is an unsubstituted p-phenylene group, X² is an unsubstituted p-phenylene group, and A is a dimethylmethylene group.

The alkylene group herein may be a substituted or unsubstituted alkylene group having 1 to 20 carbon atoms, 1 to 15 carbon atoms, 1 to 10 carbon atoms, 1 to 5 carbon atoms, or 1 to 3 carbon atoms. Examples of the alkylene group include, but are not limited to, a methylene group, an ethylene group, a propylene group, a trimethylene group, a tetramethylene group, and a dimethylmethylene group.

Specific examples of the component (B) include: trialkyl phosphates such as trimethyl phosphate and triethyl phosphate; aromatic phosphoric acid esters such as tricresyl phosphate, trixylenyl phosphate, cresyl diphenyl phosphate, cresyl di-2,6-xylenyl phosphate; and aromatic condensed phosphoric acid esters such as a reaction product of phenol, 4,4'- (propane-2,2-diyl)diphenol, and trichlorophosphine oxide and resorcinol bis-diphenylphosphate. From the viewpoint of achieving both resin strength and displacement followability, aromatic condensed phosphoric acid esters are preferred. These may be used singly or in combination of two or more of them. In one embodiment, a reaction product of phenol, 4,4'- (propane-2,2-diyl)diphenol, and trichlorophosphine oxide is suitably used as the component (B) .

In one embodiment, the content of an aromatic condensed phosphoric acid ester may be 70 mass% or more, 80 mass% or more, 90 mass% or more, or 95 mass% or more relative to the total amount of the component (B). In one embodiment, the content of an aromatic condensed phosphoric acid ester is 100 mass% relative to the total amount of the component (B) .

The viscosity of the component (B) at 25°C is preferably 0.1 to 100 Pa·s, more preferably 0.1 to 50 Pa·s, even more preferably 1 to 40 Pa·s, still even more preferably 5 to 30 Pa·s, most preferably 10 to 25 Pa·s. When the viscosity is 0.1 Pa·s or more, the component (B) is well compatible with the component (A) and flame retardancy can be imparted uniformly to the moisture-curable resin composition, and when the viscosity is 100 Pa·s or less, there is no fear of a reduction in displacement followability. The viscosity of the component (B) is a value measured with a type-B viscometer in accordance with JIS K7117-1: 1999.

Examples of a commercially-available product of the component (B) include, but are not limited to, ADK STAB (trademark, the same applies hereinafter) FP-600, PFR, and FP-900L (manufactured by ADEKA CORPORATION), REOFOS 35, 50, 65, 95, 110, and HYD-110 (manufactured by Ajinomono Fine-Techno Co., Inc.), CR-733R, CR-741, and DAIGUARD (trademark, the same applies hereinafter) - 880 (manufactured by DAIHACHI CHEMICAL INDUSTRY CO., LTD.), and HISHICOLIN (trademark) O (manufactured by NIPPON CHEMICAL INDUSTRIAL CO., LTD.). These may be used singly or in combination of two or more of them.

The content of the component (B) is preferably 10 to 500 parts by mass, more preferably 20 to 300 parts by mass, even more preferably 30 to 200 parts by mass, most preferably 50 to 120 parts by mass per 100 parts by mass of the component (A). When the content of the component (B) is 10 parts by mass or more, displacement followability can be improved, and when the content of the component (B) is 500 parts by mass or less, there is no fear of a reduction in resin strength. When two or more types of components (B) are contained, the content of the component (B) means a total content of the two or more types of components (B).

The component (C) used in the present invention is a flame retarder that is in solid form at 25°C (i.e., solid at 25°C) . The phrase "in solid form at 25°C" or "solid at 25°C" herein means being solid at 25°C under atmospheric pressure (1013.25 hPa). In the present invention, the component (C) is used in combination with the component (B) in the component (A), which makes it possible to impart excellent displacement followability and resin strength to a cured product. From the viewpoint of being dispersed in the component (A), the component (C) is preferably added as a powder. Examples of the component (C) include: halogen-based flame retarders; phosphorus-based flame retarders; flame-retardant metallic compounds such as zinc stannate, zincborate, zinc metaborate, zinc carbonate, magnesium carbonate, magnesium oxide, molybdenum oxide, tin oxide, iron oxide, zirconium oxide, antimony oxide, aluminum hydroxide, magnesium hydroxide, and calcium hydroxide; flame-retardant nitrogen-containing compounds such as melamine, melamine cyanurate, melamine phosphate, and melamine resins; and various fine particulate inorganic compounds such as polytetrafluoroethylene, thermally-expandable graphite, and zeolite. The flame-retardant metallic compounds include those in the form of a hydroxide (hereinafter referred to as "hydroxide flame retarders"), and examples thereof include, but are not limited to, aluminum hydroxide, magnesium hydroxide, and calcium hydroxide. From the viewpoint of environmental load, the component (C) is preferably free from a halogen atom. From the viewpoint of dispersibility in the component (A) and affinity for the component (B), the component (C) preferably contains a phosphorus -based flame retarder and/or a hydroxide flame retarder, and in this case, the hydroxide flame retarder more preferably contains aluminum hydroxide. In one embodiment, the component (C) may contain only a phosphorus-based flame retarder. In one embodiment, the component (C) contains both a phosphorus -based flame retarder and aluminum hydroxide. When the component (C) contains both a phosphorus-based flame retarder and aluminum hydroxide, from the viewpoint of improvement in flame retardancy and affinity for the component (B), the mass ratio between the phosphorus-based flame retarder and the aluminum hydroxide flame retarder is preferably 9: 1 to 1:9, more preferably 8:2 to 2:8, even more preferably 7:3 to 3:7, most preferably 4.5:5.5 to 3:7.

The phosphorus-based flame retarder that may be contained in the component (C) is preferably a phosphate salt-based flame retarder from the viewpoint of dispersibility in the component (A). The phosphate salt-based flame retarder in the component (C) is preferably an intumescent phosphate salt-based flame retarder. An intumescent flame retarder is a flame retarder that contains, as its components, phosphorus and nitrogen and forms a carbonized coating film when it burns, and the carbonized coating film is expanded to provide an intumescent layer contributing to flame retardancy. When such an intumescent flame retarder is contained in a composition, excellent flame retardancy is imparted to the composition.

The aluminum hydroxide that may be contained in the component (C) may be subjected to surface treatment from the viewpoint of dispersibility in the component (A) . The surface treatment that may be performed on the aluminum hydroxide that maybe contained in the component (C) is preferably surface treatment with a fatty acid, a resin acid, a fatty acid ester, a fatty acid metallic salt, a silane coupling agent, or the like, more preferably surface treatment with a silane coupling agent. The silane coupling agent that may be used for the surface treatment may have at least one functional group selected from the group consisting of a vinyl group, an epoxy group, a styryl group, a methacryloxy group, anacryloxygroup, an amino group, an isocyanurate group, a ureido group, a mercapto group, an isocyanate group, and an acyloxycarbonyl group. In one embodiment, the silane coupling agent that may be used for the surface treatment is preferably one having a methacryloxy group and an acryloxy group, most preferably one having a methacryloxy group (methacryloxysilane). Examples of the methacryloxysilane include, but are not limited to, 3-methacryloxypropylmethyl dimethoxysilane, 3-methacryloxypropyl trimethoxysilane, 3-methacryloxypropylmethyl diethoxysilane, and 3-methacryloxypropyl triethoxysilane.

In one embodiment, the content of the intumescent phosphate salt-based flame retarder may be 30 mass% or more, 50 mass% or more, 70 mass% or more, 80 mass% or more, or 90 mass% or more relative to the total amount of the component (C). In one embodiment, the content of the intumescent phosphate salt-based flame retarder is 100 mass% relative to the total amount of the component (C).

In one embodiment, the content of the aluminum hydroxide may be 30 mass% or more, 50 mass% or more, 70 mass% or more, 80 mass% or more, or 90 mass% or more relative to the total amount of the component (C).

Examples of a commercially-available product of the phosphorus -based flame retarder as the component (C) include, but are not limited to, ADK STAB FP-2100JC, FP-2500S, and FP-2600U (manufactured by ADEKA CORPORATION) and PX-200 and DAIGUARD - 850 (manufactured by DATHACHI CHEMICAL INDUSTRY CO. , LTD.) . These may be used singly or in combination of two or more of them.

Examples of a commercially-available product of the aluminum hydroxide include, but are not limited to, SB303, SB153, SB103, B303, B153, B703, B1403, BF013, B153STM, B303STE, and BF013 ST (manufactured by Nippon Light Metal Company, Ltd.). These may be used singly or in combination of two or more of them.

The median diameter of the component (C) is preferably 0.1 to 50 µm, more pref erably 0.5 to 30 µm, even more pref erably 1 to 20 µm, most preferably 5 to 20 µm. When the median diameter is 0.1 µm or more, the component (C) can uniformly be dispersed in the component (A), and when the median diameter is 50 µm or less, there is no fear of a reduction in elongation percentage. In one embodiment, when the component (C) is a phosphorus-based flame retarder, for example when the component (C) is an intumescent phosphate salt-based flame retarder, the median diameter of the component (C) may be 0.1 to 50 µm, 0.5 to 30 µm, 1 to 20 µm, 5 to 20 µm, or 5 to 10 µm. In one embodiment, when the component (C) is aluminum hydroxide, the median diameter of the component (C) may be 0.1 to 50 µm, 0.5 to 30 µm, 1 to 20 µm, 5 to 20 µm, or 10 to 20 µm. The median diameter herein refers to a particle diameter (D50) at a cumulative volume percentage of 50% in a particle size distribution determined by laser diffraction scattering.

The content of the component (C) is preferably 10 to 500 parts by mass, more preferably 20 to 300 parts by mass, even more preferably 30 to 200 parts by mass, most preferably 80 to 180 parts by mass per 100 parts by mass of the component (A). When the content of the component (C) is 10 parts by mass or more, resin strength can be improved, and when the content of the component (C) is 500 parts by mass or less, there is no fear of a reduction in the displacement followability of a cured product. When two or more types of components (C) are contained, the content of the component (C) means a total content of the two or more types of components (C) .

From the viewpoint of achieving flame retardancy corresponding to V-0, the total content of the component (B) and the component (C) is preferably 10 to 500 parts by mass, more preferably 70 to 400 parts by mass, even more preferably 100 to 300 parts by mass, most preferably 150 to 300 parts by mass relative to 100 parts by mass of the component (A) . The mass ratio between the component (B) and the component (C) is preferably 9:1 to 1:9, more preferably 8:2 to 2:8, most preferably 8:2 to 4:6. In one embodiment, the mass ratio between the component (B) and the component (C) is preferably 4:1 to 1:4, more preferably 3:1 to 1:4, even more preferably 2:1 to 1:4, still even more preferably 1:1 to 1:3. When the ratio between the total mass of the component (B) and the total mass of the component (C) is 9:1 to 1:9, a cured product can achieve both resin strength and displacement followability.

The component (D) that can be used in the present invention is a curing catalyst. The curing catalyst is not limited as long as it can crosslink the component (A), and examples thereof include: tin compounds such as dibutyltin dilaurate, dibutyltin oxide, dibutyltin diacetate, dibutyltin distearate, dibutyltin laurate oxide, dibutyltin diacetyl acetonate, dibutyltin dioleyl malate, dibutyltin octoate, dioctyltin oxide, and dioctyltin dilaurate; titanate-based compounds such as tetra-n-butoxy titanate and tetra isopropoxy titanate; lead compounds such as lead octylate and lead naphthenate; nickel compounds such as nickel naphthenate; cobalt compounds such as cobalt naphthenate; zinc catalysts such as zinc octylate, zinc naphthenate, a zinc hexacyanocobaltate complex, a zinc 1-methylimidazole-bis(2-hexanoate) complex, and a zinc alkylamine complex; iron-based compounds; bismuth catalysts such as bismuth carboxylate (also referred to as a "bismuth carboxylate catalyst") ; and metal acetyl acetonate complexes such as an aluminum acetyl acetonate complex and a vanadium acetyl acetonate complex. Amine salts such as dibutyl amine - 2 -ethyl hexoate, organic phosphoric acid compounds such as monomethyl phosphate and di-n-butyl phosphate, other acidic catalysts and basic catalysts may also be used. These may be used singly or in combination of two or more of them. Among them, from the viewpoint of improving the resin strength and displacement followability of a cured product, a zinc catalyst or a bismuth catalyst is preferably contained, and a zinc catalyst is most preferably contained. When a zinc catalyst is used, a zinc catalyst in which an amine coordinates to zinc is more preferred, and a zinc catalyst in which an alkyl amine coordinates to zinc is most preferred. When a bismuth catalyst is used, a bismuth carboxylate is most preferred.

The content of the component (D) is preferably 0.05 to 20 parts by mass, more preferably 0.1 to 15 parts by mass, even more preferably 1 to 15 parts by mass, most preferably 5 to 10 parts by mass per 100 parts by mass of the component (A). When the content of the component (D) is 0.05 parts by mass or more, a cured product excellent in resin strength can be obtained, and when the content of the component (D) is 20 parts by mass or less, there is no fear of a reduction in displacement followability.

Examples of a commercially-available product of the component (D) include, but are not limited to, tin catalysts such as NEOSTANN (trademark) U-100, U-130, U-200, and U-303 (manufactured by Nitto Kasei Co., Ltd.), titanium catalysts such as ORGATIX (trademark, the same applies hereinafter) TA-8, TA-10, TA-21, TA-23, TA-30, TA-80, TC-100, TC-120, and TC-401 (manufactured by Matsumoto Fine Chemical Co., Ltd.), bismuth catalysts such as K-KAT348, XC-C227, and XK-640 (manufactured by King Industries, Inc.), zirconium catalysts such as ORGATIX ZA- 45 (manufactured by Matsumoto Fine Chemical Co., Ltd.) and K-KAT4205, 6212, and A209 (manufactured by King Industries, Inc.), aluminum catalysts such as DX-9740 (manufactured by Shin-Etsu Chemical Co., Ltd.), AMD, ASBD, AIPD, ALCH, ALCH-TR, Aluminum chelate M, Aluminum chelate D, and Aluminum chelate A (manufactured by Kawaken Fine Chemicals Co., Ltd.), and K-KAT5218 (manufactured by King Industries, Inc.), and zinc catalysts such as K-KAT670 (manufactured by King Industries, Inc.). These may be used singly or in combination of two or more of them.

The moisture-curable resin composition of the present invention may further contain an inorganic filler as a component (E). When the component (E) is contained, resin strength can be improved. Examples of the component (E) include, but are not limited to, glass, fumed silica, alumina, mica, ceramics, silicone rubber powder, calcium carbonate, aluminum nitride, carbon powder, kaolin clay, dry mineral clay, and dry diatomaceous earth. From the viewpoint of improving resin strength without reducing displacement followability, fumed silica, talc, and calcium carbonate are preferred, fumed silica and calcium carbonate are more preferred, and fumed silica is most preferred. When fumed silica is used, from the viewpoint of improving dispersibility in the component (A) and resin strength, surface- treated fumed silica is preferably used, and fumed silica subjected to surface treatment with dimethylpolysiloxane is most preferably used.

From the viewpoint of improving resin strength without reducing displacement followability, the content of the component (E) is preferably 0.1 to 100 parts by mass, more preferably 0.5 to 50 parts by mass, even more preferably 1 to 20 parts by mass, most preferably 5 to 15 parts by mass per 100 parts by mass of the component (A).

The moisture-curable resin composition of the present invention may further contain a silane compound (excluding the component (A) and the component (E) ) as a component (F) . When the component (F) is contained, it is possible to prevent a reduction in displacement followability caused by the component (B) and the component (C). Examples of the component (F) include, but are not limited to: glycidyl group-containing silane coupling agents such as 2-(3,4-epoxycyclohexyl)ethyltrimethoxysilane, 3-glycidoxypropyltriethoxysilane, 3-glycidoxypropylmethyldimethoxysilane, 3-glycidoxypropyltrimethoxysilane, and 3-glycidoxypropylmethyldiethoxysilane; vinyl group-containing silane coupling agents such as vinyl-tris(β-methoxyethoxy)silane, vinyltriethoxysilane, and vinyltrimethoxysilane; (meth)acryl group-containing silane coupling agents such as γ-methacryloxypropyltrimethoxysilane; amino group-containing silane coupling agents such as 3-aminopropyltrimethoxysilane, N-β- (aminoethyl) -'γ-aminopropyltrimethoxysilane, γ-aminopropyltriethoxysilane, and N-phenyl-'γ-aminopropyltrimethoxysilane; and other silane compounds such as γ-mercaptopropyltrimethoxysilane, γ-chloropropyltrimethoxysilane, dimethoxydiphenylsilane, and methyltrimethoxysilane. Among them, from the viewpoint of preventing a reduction in displacement followability, a silane compound not having a reactive group other than an alkoxysilyl group is preferred, and dimethoxydiphenylsilane and methyltrimethoxysilane are more preferred. Most preferred is an alkylalkoxysilane such as methyltrimethoxysilane. In one embodiment of the present invention, the silane compound is free from a cyclic low-molecular-weight siloxane.

From the viewpoint of preventing a reduction in displacement followability, the content of the component (F) is preferably 0.1 to 50 parts by mass, more preferably 0.5 to 20 parts by mass, most preferably 1 to 10 parts by mass per 100 parts by mass of the component (A).

Various additives may be added to the flame-retardant moisture-curable resin composition of the present invention without adversely affecting the object of the present invention or may not be added. Examples of the additives include a plasticizer, a moisture absorber, a non-flame-retardant organic filler, an antioxidant, a light stabilizer, and a colorant.

Examples of the plasticizer include, but are not limited to, dibutyl phthalate, diheptyl phthalate, di(2-ethylhexyl)phthalate, butyl benzyl phthalate, butyl oleate, diethylene glycol dibenzoate, triethylene glycol dibenzoate, pentaerythritol ester, polyethylene glycol, polypropylene glycol, polytetramethylene glycol. Other examples include polyester-based plasticizers obtained from a dibasic acid such as sebacic acid, adipic acid, azelaic acid, or phthalic acid and a dihydric alcohol such as ethylene glycol, diethylene glycol, triethylene glycol, propylene glycol, or dipropylene glycol. These may be used singly or in combination of two or more of them. The amount of the plasticizer to be added is preferably 1 to 100 parts by mass per 100 parts by mass of the component (A). In one embodiment, the amount of the plasticizer to be added is 10 parts by mass or less, 5 parts by mass or less, 1 part by mass or less, or 0.1 parts by mass or less per 100 parts by mass of the component (A).

The moisture absorber is not limited as long as it reacts with moisture contained in the composition and absorbs the moisture. Examples of such a moisture absorber include silicate compounds typified by methyl silicate, ethyl silicate, propyl silicate, and butyl silicate and oligomers thereof, vinyl silanes, and calcium oxide. These may be used singly or in combination of two or more of them. The amount of the moisture absorber to be added is preferably 1 to 100 parts by mass per 100 parts by mass of the component (A).

The non-flame-retardant organic filler may be a non-flame-retardant organic powder composed of a rubber, an elastomer, a plastic, a polymer (or a copolymer), or the like. The non-flame-retardant organic filler may also be an organic filler having a multilayer structure such as a core-shell structure. These may be used singly or in combination of two or more of them. The amount of the organic filler to be added is preferably 0.1 to 50 parts by mass per 100 parts by mass of the component (A). In one embodiment, the amount of the non-flame-retardant organic filler to be added is 10 parts by mass or less, 5 parts by mass or less, 1 part by mass or less, or 0.1 parts by mass or less per 100 parts by mass of the component (A).

Examples of the antioxidant include: quinone-based compounds such as β-naphthoquinone, 2-methoxy-1,4-naphthoquinone, methyl hydroquinone, hydroquinone, hydroquinone monomethyl ether, mono-tert-butylhydroquinone, 2,5-di-tert-butylhydroquinone, p-benzoquinone, 2,5-diphenyl-p-benzoquinone, and 2,5-di-tert-butyl-p-benzoquinone; phenols such as phenothiazine, 2,2-methylene-bis(4-methyl-6-tert-butylphenol), catechol, tert-butyl catechol, 2-butyl-4-hydroxyanisole, 2,6-di-tert-butyl-p-cresol, 2-tert-butyl-6-(3-tert-butyl-2-hydroxy-5-methylbenzyl)-4 -methylphenyl acrylate, 2-[1-(2-hydroxy-3,5-di-tert-pentylphenyl)ethyl]-4,6-di-t ert-pentylphenyl acrylate, 4,4'-butylidene bis(6-tert-butyl-3-methylphenol), 4,4' -thiobis(6-tert-butyl-3-methylphenol), 3,9-bis[2-[3-(3-tert-butyl-4-hydroxy-5-methylphenyl)prop ionyloxy]-1,1-dimethylethyl]-2,4,8,10-tetraoxaspiro[5,5] undecane, pentaerythritol tetrakis[3-(3,5-di-tert-butyl-4-hydroxyphenyl)propionate ], thiodiethylene bis[3- (3,5-di-tert-butyl-4-hydroxyphenyl)propionate], octadecyl-3-(3,5-di-tert-butyl-4-hydroxyphenyl)propionat e, N,N'-hexane-1,6-diylbis[3-(3,5-di-tert-butyl-4-hydroxyph enyl)propionamide], benzenepropanoic acid 3,5-bis(1,1-dimethylethyl)-4-hydroxy-C7-C9 branched alkyl esters, 2,4-dimethyl-6-(1-methylpentadecyl)phenol, diethyl[[3,5-bis(1,1-dimethylethyl)-4-hydroxyphenyl)meth yl]phosphonate, 3,3',3",5,5',5"-hexa-tert-butyl-a,a',a"-(mesitylene-2 ,4,6-triyl)tri-p-cresol, calcium diethyl bis[[3,5-bis(1,1-dimethylethyl)-4-hydroxyphenyl]methyl]p hosphonate, 4,6-bis(octylthiomethyl)-o-cresol, ethylene bis(oxyethylene)bis[3-(5-tert-butyl-4-hydroxy-m-tolyl)pr opionate], hexamethylene bis[3-(3,5-di-tert-butyl-4-hydroxyphenyl)propionate, 1,3,5-tris(3,5-di-tert-butyl-4-hydroxybenzyl]-1,3,5-tria zine-2,4,6(1H,3H,5H)-trione, 1,3,5-tris[(4-tert-butyl-3-hydroxy-2,6-xylyl)methyl]-1,3 ,5-triazine-2,4,6(1H,3H,5H)-trione, a reaction product of N-phenylbenzeneamine and 2,4,6-trimethylpentene, 2,6-di-tert-butyl-4-(4,6-bis(octylthio)-1,3,5-triazin-2-ylamino)phenol, picric acid, and citric acid; phosphorus-based compounds such as tris(2,4-di-tert-butylphenyl)phosphite, tris[2-[[2,4,8,10-tetra-tert-butyldibenzol[d,f][1,3,2]dio xaphosphepin-6-yl]oxy] ethyl] amine, bis(2,4-di-tert-butylphenyl)pentaerythritol diphosphite, phosphorous acid bis[2,4-bis(1,1-dimethylethyl)-6-methylphenyl]ethyl ester, tetrakis(2,4-di-tert-butylphenyl)[1,1-bisphenyl]-4,4'-di ylbisphosphonite, and 6- [3- (3-tert-butyl-4-hydroxy-5-methylphenyl)propoxy] -2,4 ,8,10-tetra-tert-butyldibenz[d,f][1,3,2]dioxaphosphepin; amine-based compounds such as phenothiazine; lactone-based compounds; and vitamin E-based compounds. These may be used singly or in combination of two or more of them. The amount of the antioxidant to be added is preferably 0.01 to 30 parts by mass per 100 parts by mass of the component (A). In one embodiment, the amount of the antioxidant to be added is 0.05 to 10 parts by mass or 0.1 to 5 parts by mass per 100 parts by mass of the component (A).

Examples of the light stabilizer include: hindered amine-based compounds such as bis(2,2,6,6-tetramethyl-4-piperidyl)sebacate, bis(1,2,2,6,6-pentamethyl-4-piperidyl)sebacate, 4-benzoyloxy-2,2,6,6-tetramethylpiperidine, 1-[2-[3-(3,5-di-tert-butyl-4-hydroxyphenyl)propionyloxy) ethyl]-4-[3-(3,5-di-tert-butyl-4-hydroxyphenyl)propionyl oxy]-2,2,6,6-tetramethylpiperidine, 1,2,2,6,6-pentamethyl-4-piperidinyl-methacrylate, bis(1,2,2,6,6-pentamethyl-4-piperidinyl)[[3,5-bis(1,1-di methylethyl-4-hydroxyphenyl)methyl]butylmalonate, reaction products with decanedioic acid bis(2,2,6,6-tetramethyl-1(octyloxy) -4-piperidinyl) ester, 1,1-dimethylethylhydroperoxide, and octane, N,N',N",N"'-tetrakis-(4,6-bis-(butyl-(N-methyl-2,2,6,6 -tetramethylpiperidin-4-yl)amino)-triazin-2-yl)-4,7-diaz adecane-1,10-diamine, a polycondensate of dibutylamine 1,3,5-triazine N,N'-bis(2,2,6,6-tetramethyl-4-piperidyl-1,6-hexamethyle nediamine and N-(2,2,6,6-tetramethyl-4-piperidyl)butylamine, poly[[6-(1,1,3,3-tetramethylbutyl)amino-1,3,5-triazine-2 ,4-diyl][(2,2,6,6-tetramethyl-4-piperidyl)imino]hexameth ylene[(2,2,6,6-tetramethyl-4-piperidyl)imino]], a polymer of dimethyl succinate and 4-hydroxy-2,2,6,6-tetramethyl-1-piperidineethanol, 2,2,4,4-tetramethyl-20-(β-lauryloxycarbonyl)ethyl-7-oxa-3,20-diazadispiro[5,1,11,2]heneicosan-21-one, β-alanine N-(2,2,6,6-tetramethyl-4-piperidinyl)-dodecyl ester/tetradecyl ester, N-acetyl-3-dodecyl-1-(2,2,6,6-tetramethyl-4-piperidinyl) pyrrolidine-2,5-dione, 2,2,4,4-tetramethyl-7-oxa-3,20-diazadispiro-[5,1,11,2]-h eneicosan-21-one, 2,2,4,4-tetramethyl-21-oxa-3,20-diazadicyclo-[5,1,11,2]-heneicosane-20-propanoic acid dodecyl ester/tetradecyl ester, propanedioic acid [(4-methoxyphenyl)-methylene]-bis(1,2,2,6,6-pentamethyl-4-piperidinyl)ester), a higher fatty acid ester of 2,2,6,6-tetramethyl-4-piperidinol, and N,N'-bis(2,2,6,6-tetramethyl-4-piperidinyl)-1,3-benzened icarboxamide; benzophenone-based compounds such as octabenzone; benzotriazole-based compounds such as 2-(2H-benzotriazol-2-yl)-4-(1,1,3,3-tetramethylbutyl)phe nol, 2-(2-hydroxy-5-methylphenyl)benzotriazole, 2-[2-hydroxy-3-(3,4,5,6-tetrahydrophthalimide-methyl)-5-methylphenyl]benzotriazole, 2-(3-tert-butyl-2-hydroxy-5-methylphenyl)-5-chlorobenzot riazole, 2-(2-hydroxy-3,5-di-tert-pentylphenyl)benzotriazole, a reaction product of methyl 3-(3-(2H-benzotriazol-2-yl)-5-tert-butyl-4-hydroxyphenyl )propionate and polyethylene glycol, and 2-(2H-benzotriazol-2-yl)-6-dodecyl-4-methylphenol; benzoate-based compounds such as 2,4-di-tert-butylphenyl-3,5-di-tert-butyl-4-hydroxybenzo ate; and triazine-based compounds such as 2-(4,6-diphenyl-,1,3,5-triazin-2-yl)-5-[(hexyl)oxy]pheno l. These may be used singly or in combination of two or more of them. The amount of the light stabilizer to be added is preferably 0.01 to 30 parts by mass per 100 parts by mass of the component (A). In one embodiment, the amount of the light stabilizer to be added is 0.05 to 10 parts by mass or **0.1** to 5 parts by mass per 100 parts by mass of the component (A) .

Examples of the colorant include: inorganic pigments such as titanium oxide, ultramarine, colcothar, lithopone, lead, cadmium, iron, cobalt, aluminum, hydrochloric acid salts, and sulfuric acid salts; and organic pigments such as azo pigments, phthalocyanine pigments, quinacridone pigments, quinacridonequinone pigments, dioxazine pigments, anthrapyrimidine pigments, anthanthrone pigments, indanthrone pigments, flavanthrone pigments, perylene pigments, perinone pigments, diketo-pyrrolo-pyrrole pigments, quinonaphthalone pigments, anthraquinone pigments, thioindigo pigments, benzimidazolone pigments, isoindoline pigments, and carbon black. The amount of the colorant to be added is preferably 0.01 to 30 parts by mass per 100 parts by mass of the component (A). In one embodiment, the amount of the colorant to be added is 0.05 to 10 parts by mass or 0.1 to 5 parts by mass per 100 parts by mass of the component (A) .

In one aspect of the present invention, the content of a low-molecular-weight siloxane in themoisture-curable resin composition is 0 to 10 mass%. In one embodiment, the content of a low-molecular-weight siloxane in the moisture-curable resin composition is 10 mass% or less, 5 mass% or less, 3 mass% or less, 1 mass% or less, or 0.1 mass% or less. In one embodiment, the content of a low-molecular-weight siloxane in the moisture-curable resin composition may be 1000 ppm by mass or less, 100 ppm by mass or less, 10 ppm by mass or less, 1 ppm by mass or less, or 0.1 ppm by mass or less. The content of a low-molecular-weight siloxane in the moisture-curable resin composition is herein measured using a gas chromatograph mass spectrometer (GC-MS).

The moisture-curable resin composition of the present invention can be produced as a one-component resin composition or as a two-component resin composition according to needs. The moisture-curable resin composition of the present invention is most suitably used as a sealant, but can be used also as an adhesive, a pressure-sensitive adhesive, a coating agent, a potting agent, or the like as required. The moisture- curable resin composition according to an embodiment of the present invention can be used in various fields such as the electric/electronic field, the architecture field, the automotive field, and the civil engineering field, but is particularly suitably used for electric/electronic components and automotive electric components because its cured product has excellent resin strength and displacement followability and is free from cyclic low-molecular-weight siloxanes such as octamethylcyclotetrasiloxane, decamethylcyclopentasiloxane, and dodecamethylcyclohexasiloxane. Particularly, sheet metal having low stiffness is often used for automotive electric components (battery cases), and therefore their sealed portions are likely to deform due to vibration during driving. For this reason, cured products derived from the moisture-curable resin composition of the present invention having displacement followability are particularly effective for such uses.

### <Method for producing moisture-curable resin composition>

A method for producing the moisture-curable resin composition of the present invention is not limited, and a conventionally-known method may appropriately be used. For example, the component (A), the component (B), the component (C), the component (D), and a component to be optionally added are weighed in their respective predetermined amounts and added to a stirring tank one by one in any order or at the same time, and then a resultant is mixed using a mixing means such as a planetary mixer while being preferably subjected to vacuum degassing. Preferably, the component (D) is added last. By adding the component (D) last, it is possible to prevent the progress of a curing reaction in an undesired stage. In this case, production conditions are not limited, but a mixing temperature is preferably 10 to 50°C, and a mixing time is preferably 0.1 to 5 hours.

Specifically, for example, the components (A) to (C) are first weighed in a stirring container and stirred at room temperature for 10 minutes to 1 hour, preferably 10 to 30 minutes. Then, the components (E) and (F) are added to a mixture obtained by stirring, and a resultant is further stirred at room temperature for 1 minute to 1 hour, preferably 5 to 20 minutes. Then, the component (D) is added to an obtained mixture, and a resultant is further stirred at room temperature for 1 minute to 1 hour, preferably 5 to 20 minutes to obtain a moisture-curable resin composition.

From the viewpoint of handleability during application, the viscosity of the moisture-curable resin composition of the present invention at 25°C is, for example, 0.01 to 500 Pa·s, preferably 1 to 300 Pa·s, more preferably 100 to 250 Pa·s.

### <Application method>

A method for applying the moisture-curable resin composition of the present invention onto an adherend is not limited, and a conventionally-known method for applying a sealant or an adhesive is used. For example, various methods can be used, such as dispensing using an automatic dispensing machine, spraying, ink jetting, screen printing, gravure printing, dipping, and spin coating. It should be noted that the moisture-curable resin composition of the present invention is in liquid form at 25°C from the viewpoint of applicability.

### <Curing method>

A method for curing the moisture-curable resin composition of the present invention is not limited, and a conventionally-known curing method maybe used. For example, the moisture-curable resin composition of the present invention can be cured by exposing it to air containingmoisture, for example, by allowing it to stand in an air atmosphere at a humidity of 40 to 60% RH for 1 hour to 2 weeks. A curing temperature for curing the moisture-curable resin composition of the present invention is not limited, but is preferably 10 to 50°C or 15 to 30°C. A relative humidity during curing is preferably 40% RH or more. A standing time for curing is not limited, but is preferably 1 hour or more and less than 2 weeks, more preferably 3 hours or more and 10 days or less, even more preferably 1 day or more and 9 days or less, still even more preferably 3 days or more and 8 days or less. As described above, the moisture-curable resin composition of the present invention is excellent in curability.

### <Cured product>

A cured product of the present invention can be obtained by curing the moisture-curable resin composition of the present invention.

In one embodiment, the hardness of the cured product of the present invention may be A10 or more, preferably A20 or more, more preferably A30 or more. The upper limit of the hardness of the cured product is not limited, but may be, for example, A80 or less or A60 or less. The hardness of the cured product may be herein measured with a type-A durometer in accordance with JIS K6249: 2003.

Therefore, the present invention also provides a moisture-curable resin composition whose cured product obtained by curing has such a hardness as described above.

In one embodiment, the elongation percentage of the cured product of the present invention as measured by a tensile test may be 300% or more, preferably 400% or more, more preferably 500% or more. The upper limit of the elongation percentage of the cured product as measured by a tensile test is not limited, but may be 1000% or less, 800% or less, or 600% or less.

Therefore, the present invention also provides a moisture-curable resin composition whose cured product obtained by curing has such an elongation percentage as measured by a tensile test as described above.

In one embodiment, the tensile strength of the cured product of the present invention as measured by a tensile test may be 1.0 MPa or more, preferably 1.3 MPa or more, more preferably 1.5 MPa or more. The upper limit of the tensile strength of the cured product as measured by a tensile test is not limited, but may be 5.0 MPa or less or 3.0 MPa or less. The tensile test is herein performed using a type-3 dumbbell test specimen in accordance with JIS K6251: 2017, and the elongation percentage and tensile strength of the cured product can be calculated from the result of this tensile test.

Therefore, the present invention also provides a moisture-curable resin composition whose cured product obtained by curing has such a tensile strength as measured by a tensile test as described above.

The cured product of the present invention has flame retardancy corresponding to UL94V-0 or higher. The flame retardancy of the cured product of the present invention may be, for example, UL94V-0, UL94 5VB, or UL94 5VA. The flammability of the cured product of the present invention can be examined by the 20-mm vertical burning test method of the UL94 standard.

Therefore, the present invention also provides a moisture-curable resin composition whose cured product obtained by curing has such flame retardancy as described above.

### <Bonded body>

In a bonded body of the present invention, the cured product may function as an adhesive layer between two adherends. In one embodiment, the bonded body is not limited as long as it is obtained by bonding adherends with the curable resin composition of the present invention. Examples of the adherends include, but are not limited to: metals such as iron, copper, zinc, aluminum, and magnesium; plastics such as polycarbonate, polyacrylate polyphenylene ether, polybutylene terephthalate, polyethylene, polyamide, polyimide, polyphenylene sulfide, polyether ether ketone, and fluoropolymers; and ceramics such as glass and silica. In one embodiment, the bonded body may be, but is not limited to, an automotive battery case.

### EXAMPLES

Hereinbelow, the present invention will be described in more detail with reference to examples, but the present invention is not limited only to these examples.

### [Examples 1 to 6, Comparative Examples 1 to 5]

The following components were prepared to produce moisture-curable resin compositions.
(A-1): A polymer having a polyoxyalkylene moiety having trimethoxysilyl groups at its both ends (polyoxyalkylene polymer), trade name: Kaneka Silyl SAX575 (manufactured by KANEKA CORPORATION), viscosity (23°C) 50 Pa·s
(A-2) : A mixture of a polymer having a polyoxyalkylene moiety having trimethoxysilyl groups at its both ends and an acrylic polymer, trade name: Kaneka Silyl MA451, viscosity (23°C) 90 Pa·s
(A' -1) : An acrylic polymer having dimethoxysilyl groups at its both ends, trade name: XMAP SA100S (manufactured by KANEKA CORPORATION), viscosity (23°C) 230 Pa·s
(A' -2) : An acrylic polymer having trimethoxysilyl groups at its both ends, trade name: XMAP OR110S, viscosity (23°C) 1150 Pa·s
(B): An aromatic condensed phosphoric acid ester flame retarder that is in liquid form at 25°C, a reaction product of phenol, 4,4'-(propane-2,2-diyl)diphenol, and trichlorophosphine oxide, trade name: ADK STAB FP-600 (manufactured by ADEKA CORPORATION) , viscosity (25°C) : 19 Pa·s
(C-1): A phosphate salt-based flame retarder that is solid at 25°C (in powder format 25°C), trade name: ADK STAB FP-2500S (manufactured by ADEKA CORPORATION), median diameter: 7 µm
(C-2): An aluminum hydroxide flame retarder that is solid at 25°C and has been subjected to surface treatment with methacryloxysilane, trade name: B153STM (manufactured by Nippon light Metal Company, Ltd.), median diameter: 15 µm (D-1): A zinc catalyst in which an alkylamine coordinates to zinc, tradename: K-KAT670 (manufactured by King Industries Inc.)
(D-2): A bismuth carboxylate catalyst, trade name: K-KATXK-640 (manufactured by King Industries Inc.)
(E) : Fumed silica surface treated with dimethylpolysiloxane, trade name: RY200 (manufactured by NIPPON AEROSIL CO. , LTD.)
(F): Methyltrimethoxysilane, trade name: KBM-13 (manufactured by Shin-Etsu Chemical Co., Ltd.)

The components (A) to (C) were weighed in a stirring container and stirred for 30 minutes. The components (E) and (F) were weighed and added to a mixture obtained by stirring, and a resulting mixture was further stirred for 10 minutes. Then, the component (D) was weighed and added to an obtained mixture, and a resultant was further stirred for 10 minutes to obtain a moisture-curable resin composition. The amounts of the components (A) to (F) prepared are specifically shown in Tables 1 and 2 and are all expressed as parts by mass. The polymers used as the component (A) do not have a structure that may generate a low-molecular-weight siloxane, and therefore the obtained moisture-curable resin compositions are free from a low-molecular-weight siloxane.

### [Hardness]

The moisture-curable resin composition was applied onto a base material with the use of a squeegee made of polytetrafluoroethylene in the form of a sheet having a thickness of 1 mm and was allowed to stand in an atmosphere at 23°C and 50% RH for 7 days for curing to obtain a sheet-shaped cured product. In the same manner, 6 sheet-shaped cured products were produced in total. The produced6 sheet-shaped cured products were stacked in a thickness direction, and the pressure surface of a type-A durometer was brought into close contact with the cured product by pressing at a force of 10 N while being maintained parallel to the cured product. The maximum value of the type-A durometer at the time of close contact was defined as "hardness". Details about the measurement are described in JIS K6249: 2003.

Acceptance criterion: The hardness is A10 or more, more preferably A20 or more.

The upper limit of the hardness is, but not limited to, A60 or less.

### [Elongation percentage (displacement followability)]

The moisture-curable resin composition was applied onto a base material with the use of a squeegee made of polytetrafluoroethylene in the form of a sheet having a thickness of 2 mm and was allowed to stand in an atmosphere at 23°C and 50% RH for 7 days to obtain a sheet-shaped cured product. A type-3 dumbbell test specimen was cut out from the sheet-shaped cured product, and the gauge length of the test specimen was set to 25 mm**.** The dumbbell-shaped test specimen was pulled by a tensile tester at 500 mm/min to measure the gauge length (mm) at break, and the elongation percentage (%) was calculated by the following formula. The test was performed in accordance with JIS K6251: 2017, which was detailed. Elongation percentage (%) = {(gauge length at break - initial gauge length)/initial gauge length} × 100

Acceptance criterion: The elongation percentage is 300% or more, more preferably 400% or more.

The upper limit of the elongation percentage is, but not limited to, 800% or less or 600% or less.

### [Tensile strength (resin strength)]

The moisture-curable resin composition was applied onto a base material with the use of a squeegee made of polytetrafluoroethylene in the form of a sheet having a thickness of 2 mm and was allowed to stand in an atmosphere at 23°C and 50% RH for 7 days to obtain a sheet-shaped cured product. A type-3 dumbbell test specimen was cut out from the sheet-shaped cured product, and the gauge length of the test specimen was set to 25 mm. The dumbbell-shaped test specimen was pulled by a tensile tester at 500 mm/min, and the maximum strength at break was defined as a tensile strength (MPa) .

Acceptance criterion: The tensile strength is 1.0 MPa or more, more preferably 1.3 MPa or more.

Theupper limit of the tensile strength is, but not limited to, 3.0 MPa or less.

### [Burning test (UL94V-0)]

The moisture-curable resin composition was applied onto a base material with the use of a squeegee made of polytetrafluoroethylene in the form of a sheet having a thickness of 1.5 mm and was allowed to stand in an atmosphere at 23°C and 50% RH for 7 days to obtain a sheet-shaped cured product. The sheet-shaped cured product was cut to have a size of 12.5 mm (width) ×130 mm (length) × 1.5 mm (thickness) and was subjected to the 20-mm vertical burning test method of the UL94 standard.

Acceptance criterion: The flammability corresponds to V-0 (the following (1) to (5) should be all satisfied).
t1: Duration of afterflame time (sec) after first flame application
t2: Duration of afterflame time (sec) after second flame application
t3: Duration of afterglow time (sec) after second flame application
   (1) The afterflame time t1 or t2 is within 10 seconds.
   (2) The total afterflame time (t1 + t2) in all the test processes for test specimens is 50 seconds or less.
   (3) The total of the afterflame time and the afterglow time of each test specimen after second flame application (t2 + t3) is 30 seconds or less.
   (4) Each test specimen does not exhibit afterflame or afterglow up to the holding clamp.
   (5) The cotton indicator is not ignited by flaming debris or droplets.

**[Table 1]**

| | | Example 1 | Example 2 | Example 3 | Example 4 | Example 5 | Example 6 | Compara tive Example 1 | Compara tive Example 2 | Compara tive Example 3 | Compara tive Example 4 | Compara tive Example 5 |
|---|---|---|---|---|---|---|---|---|---|---|---|---|
| A-1 | SAX575 | 100 | 100 | 100 | | 100 | 100 | 100 | 100 | | | 100 |
| A-2 | MA451 | | | | 100 | | | | | | | |
| A'-1 | SA100S | | | | | | | | | 100 | | |
| A'-2 | OR110S | | | | | | | | | | 100 | |
| B | FP-600 | 100 | 50 | 150 | 100 | 100 | 50 | 200 | | 100 | 100 | |
| C-1 | FP-2500S | 100 | 150 | 50 | 100 | 100 | 50 | | 200 | 100 | 100 | |
| C-2 | B153STM | | | | | | 100 | | | | | 200 |
| D-1 | K-KAT670 | 10 | 10 | 10 | 10 | | 10 | 10 | 10 | 10 | 10 | 10 |
| D-2 | K-KATXK-640 | | | | | 10 | | | | | | |
| E | RY200 | 10 | 10 | 10 | 10 | 10 | 10 | 10 | 10 | 10 | 10 | 10 |
| F | KBM-13 | 6 | 6 | 6 | 6 | 6 | 6 | 6 | 6 | 6 | 6 | 6 |
| Hardness | - | A23 | A42 | A11 | A15 | A29 | A34 | A4 | A57 | A4 | A6 | A63 |
| Elongation percentage | % | 575 | 380 | 615 | 350 | 325 | 485 | 300 | 65 | 285 | 270 | 70 |
| Tensile strength | MPa | 1.60 | 1.63 | 1.16 | 1.06 | 2.19 | 1.31 | 0.40 | 1.44 | 0.48 | 0.58 | 1.55 |
| Burning test | - | V-0 | V-0 | V-0 | V-0 | V-0 | V-0 | V-0 | V-0 | V-0 | V-0 | V-0 |

As can be seen from Table 1, the cured products of Examples 1 to 6 have flame retardancy corresponding to V- 0 and excellent hardness, elongation percentage, and tensile strength. On the other hand, the cured product of Comparative Example 1 not using the component (C) was inferior in hardness and tensile strength. The cured products of Comparative Example 2 and Comparative Example 5 not using the component (B) were significantly inferior in elongation percentage. Further, the cured products of Comparative Example 3 and Comparative Example 4 using only the compound whose main skeleton was an acrylic polymer instead of the component (A) were inferior in all of hardness, elongation percentage, and tensile strength. From the above results, it can be said that the components (A) to (D) contained in the moisture-curable resin composition of the present invention allow a cured product of the moisture-curable resin composition to have excellent hardness, elongation percentage, and tensile strength while maintaining flame retardancy corresponding to V-0. That is, it can be considered that the components (A) to (D) contained in the moisture-curable resin composition of the present invention allow a cured product of the moisture-curable resin composition to exhibit excellent resin strength and displacement followability while maintaining satisfactory flame retardancy.

Further, the resin composition obtained in Example 1 was analyzed by a gas chromatograph mass spectrometer (GC-MS) . At this time, pretreatment was performed by a head space method. As a result, a cyclic low-molecular-weight siloxane was not detected in the resin composition of Example 1 and was equal to or less than a measurement limit (100 ppm or less). This result confirmed that the present invention makes it possible to obtain a moisture-curable resin composition free from a cyclic low-molecular-weight siloxane.

### INDUSTRIAL APPLICABILITY

The moisture-curable resin composition of the present invention is very useful in various fields because a cured product that has excellent displacement followability and resin strength while maintaining flame retardancy can be obtained.

The present application is based on Japanese Patent Application No. 2022-139617 filed on September 2, 2022, the entire disclosure of which is incorporated herein by reference.

## Claims

1. A moisture-curable resin composition comprising the following components (A) to (D):
component (A): an oxyalkylene polymer having a hydrolyzable silyl group;
component (B) : a flame retarder that is in liquid form at 25°C;
component (C) : a flame retarder that is solid at 25°C; and
component (D): a curing catalyst.

2. The moisture-curable resin composition according to claim 1, wherein the component (B) contains a phosphorus-based flame retarder.

3. The moisture-curable resin composition according to claim 2, wherein the component (B) contains a compound represented by the following formula (3): 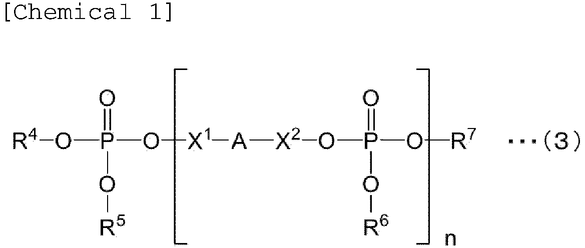
wherein groups represented by R⁴ to R⁷ are each independently a hydrogen atom, an alkyl group, or a monovalent aromatic hydrocarbon group;
X¹ is a divalent aromatic hydrocarbon group;
X² is a single bond or a divalent aromatic hydrocarbon group;
a group represented by A is a single bond, an alkylene group, or a divalent aromatic hydrocarbon group, wherein when X² is a single bond, A is a single bond; and
n represents a polymerization degree and is an integer of 1 to 5.

4. The moisture-curable resin composition according to claim 1, wherein the component (C) contains a phosphorus-based flame retarder and/or aluminum hydroxide.

5. The moisture-curable resin composition according to claim 1, wherein a mass ratio between the component (B) and the component (C) is 9:1 to 1:9.

6. The moisture-curable resin composition according to claim 1, wherein a total amount of the component (B) and the component (C) is 10 to 500 parts by mass per 100 parts by mass of the component (A).

7. The moisture-curable resin composition according to claim 1, wherein the component (D) is a zinc catalyst and/or a bismuth catalyst.

8. The moisture-curable resin composition according to claim 1, further comprising an inorganic filler as a component (E).

9. The moisture-curable resin composition according to claim 1, further comprising a silane compound as a component (F) .

10. A cured product formed by curing the moisture-curable resin composition according to any one of claims 1 to 9.
